# EUROPEAN PATENT SPECIFICATION

(11) **EP 0 617 486 B1**
(45) Date of publication and mention of the grant of the patent: **10.06.1998**
(21) Application number: 94301057.9
(22) Date of filing: 14.02.1994
(51) Int. Cl.: H01R 23/10, H02J 7/00

(54) **Connector for a battery**
Verbinder für Batterie
Connecteur pour batterie

(30) Priority: 23.03.1993 US 35817
(43) Date of publication of application: 28.09.1994
(73) Proprietor: THE WHITAKER CORPORATION, Wilmington, Delaware 19808 (US)
(72) Inventor: Douty, George Harold, Mifflintown, Pennsylvania 17059 (US); Griesemer, David Alan, Harrisburg, Pennsylvania 17105 (US); Huss Jr.,John Phillip, Harrisburg, Pennsylvania 17112 (US); Landis, John Michael, Camp Hill, Pennsylvania 17011 (US); Long, Michael David, Hershey, Pennsylvania 17033 (US); McCleerey, Earl William, Mechanicsburg, Pennsylvania 17055 (US); Reynolds, Charles Edward, Mechanicsburg, Pennsylvania 17055 (US); Shirk, Michael Eugene, Grantville, Pennsylvania 17028 (US); Weidler, Charles Harry, Lancaster, Pennsylvania 17603 (US)
(74) Representative: Warren, Keith Stanley

(56) References cited:
- EP-A- 0 535 975
- US-A- 3 348 116
- US-A- 3 728 664
- US-A- 4 680 527

## Description

This invention relates to an electrical connector for a battery, and more particularly, to an electrical connector which is suitable for connecting a rechargeable battery to a circuit board of electronic equipment.

Batteries used to power portable electronic equipment for consumer and business use, such as, video cameras, cellular telephones and computers are considerable weight, for example 30 percent of the weight of the equipment itself in the case of computers. To reduce the weight and the size of such a battery would, however, result in more frequent battery replacement, or more frequent recharging of a spent battery. Consequently a new generation of smaller, lighter batteries is being developed, which have charging circuits inside the batteries themselves. The charging circuits are electronically controlled to charge quickly, and to shut off when full charge is approached. A connector for a rechargeable battery would need to provide electrical connections for discharging the battery, and separate electrical connections for a charging control circuit within the battery.

The invention is intended to provide a connector which includes battery terminals and a package containing the terminals and further containing the battery, electrical connections for the battery and a charging control circuit.

The present invention consists in an electrical connector assembly as defined in claim 1. Embodiments of the invention are defined in the subordinate claims.
FIGURE 1 is a perspective view of an electrical connector for a rechargeable battery together with a mating electrical connector, according to an embodiment of the present invention;
FIGURE 2 is a fragmentary view in section of the battery connector mated with the mating connector;
FIGURE 3 is perspective view of multiple battery cells;
FIGURE 4 is a schematic view showing the interconnection of the battery cells with electrical terminals of the battery connector;
FIGURE 5 is a fragmentary elevation view showing a board lock of the mating connector;
FIGURE 6 is a plan view of a metal blank;
FIGURE 7 is a side view of an electrical contact formed from the metal blank;
FIGURE 8 is an end view of the mating connector Figure 1;
FIGURE 9 is an enlarged fragmentary view in section of a coupling between the mated connectors shown in Figure 2;
FIGURE 10 is an end view of the battery connector as shown in Figure 1;
FIGURE 11 is a fragmentary view in section of a modified battery connector mated with the mating connector shown in Figure 1;
FIGURE 12 is a perspective view similar to that of Figure 1 of a connector for a rechargeable battery, and a mating connector, according to another embodiment of the present invention;
FIGURE 13 is a view similar to that of Figure 2, but showing the connectors of Figure 12 mated;
FIGURE 14 is a plan view of a metal blank;
FIGURE 15 is a side view of a battery terminal of said other embodiment formed from the metal blank shown in Figure 14; and

US-A-4 680 527 discloses an electrical connector comprising a package containing a battery and an associated battery charging control circuit. The battery terminals of the connector, are, however, not supported proximate to an end and an adjacent side of the connector for exposure therethrough.

US-A-3 348 116 discloses terminals formed at the end of a battery containing connector and which are exposed through an end and an adjacent side of the connector.

Embodiments of the present invention will now be described by way of example with reference to the accompanying drawings, in which:

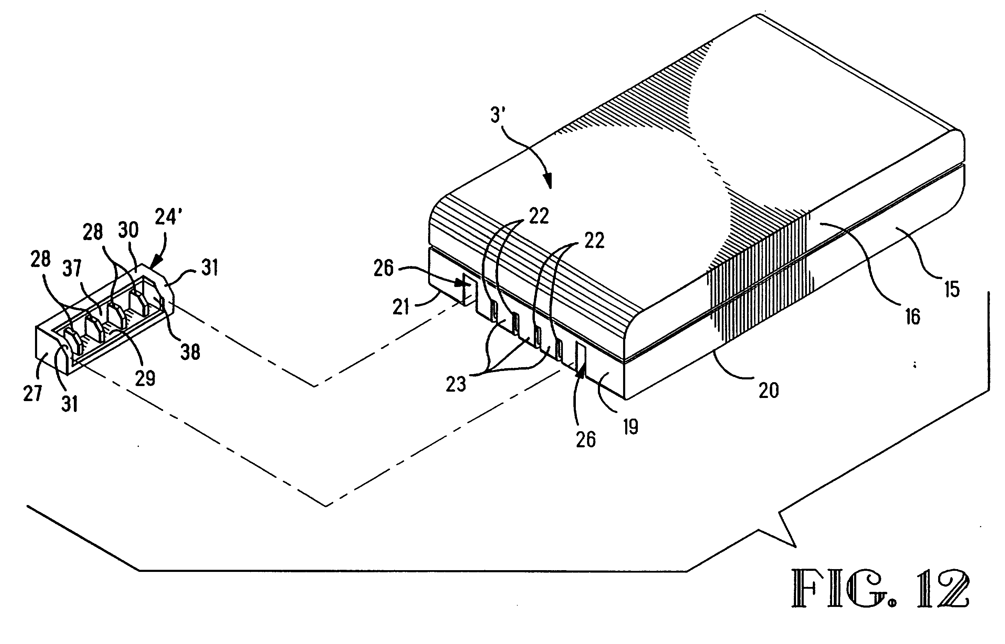

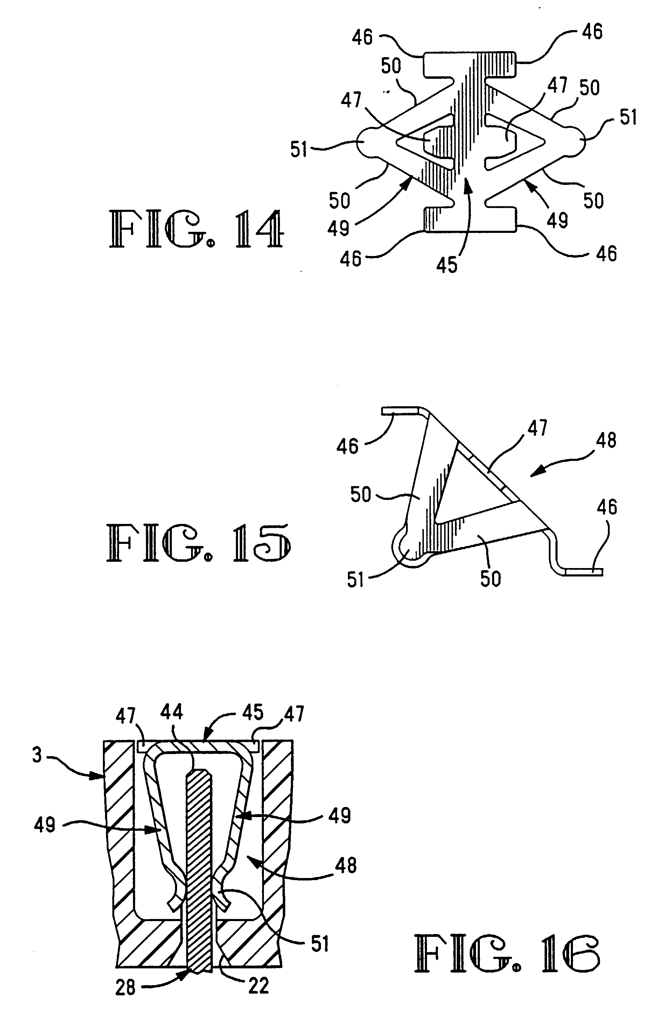

FIGURE 16 is a fragmentary view in section of the battery terminal of Figure 15 in mated with an electrical contact of the mating connector shown in Figure 12.

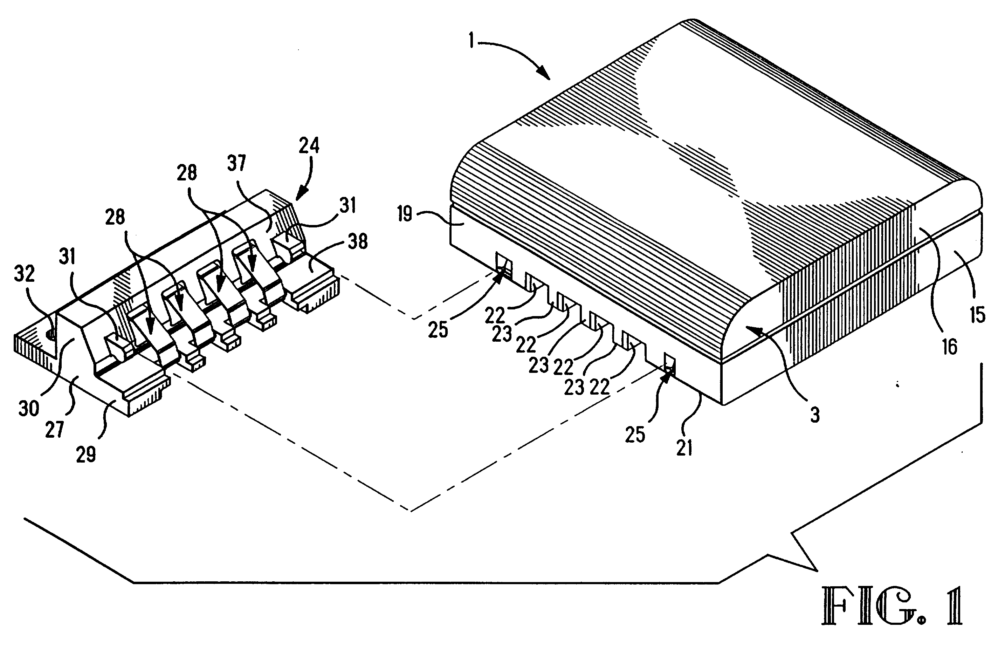

As shown in Figures 1 to 4, and 10, an electrical connector **1** for a battery **2** comprises, an insulating package **3** containing multiple cells **4** of the battery 2, and a row of four battery terminals. A first set of the battery terminals comprises the positive polarity terminal 5, and the negative polarity terminal 8, of the battery 2. The terminals 5 and 8 are at opposite ends of the row of battery terminals. A second set of the battery terminals comprises a data terminal 6 and a charging terminal 7. The data terminal 6 is for the connection of electronic data to an electronically controlled charging circuit which is referred to more specifically below. The charging terminal 7 is for connection of a thermistor controlled, charging transformer, not shown.

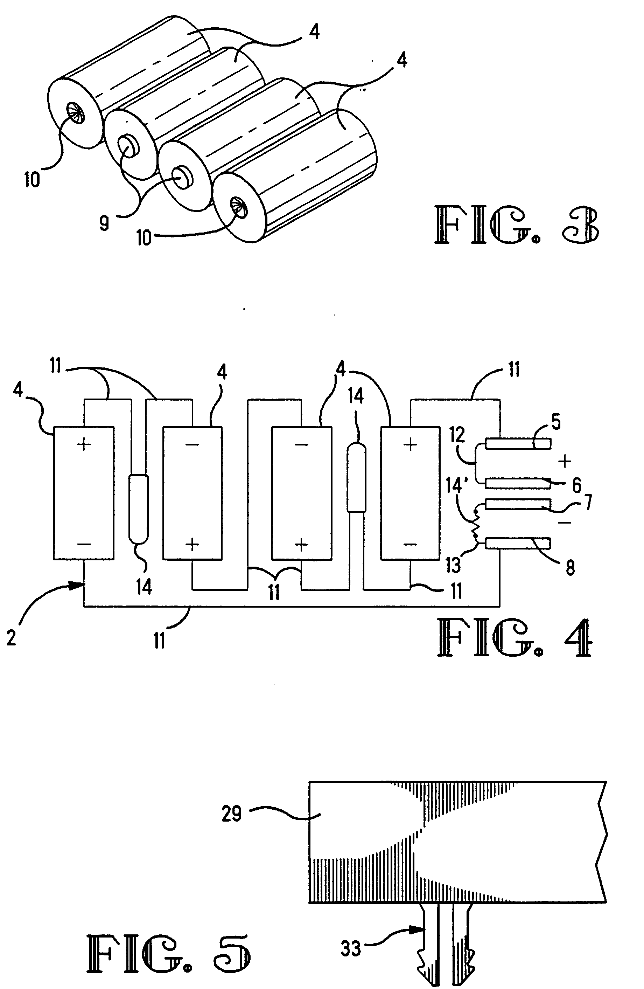

As shown in Figures 3 and 4, a group of the cells 4 are positioned for reception in the package 3. The cells 4 each are of known, dry cell, construction and are capable of being recharged by the thermistor controlled, charging transformer. Each cell 4 provides 1.5 Volts, and includes a positive polarity, cell terminal **9**, at one end, and a negative polarity, cell terminal **10** at another end.

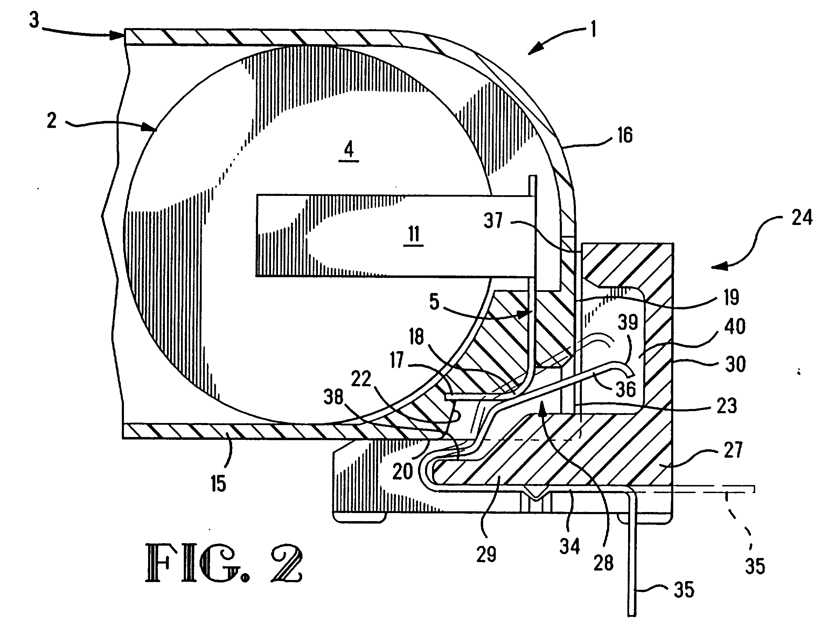

The interconnections between the cells 4 and the terminals 5, 6, 7 and 8, inside the package 3, will now be described. The group of cells 4 are connected electrically in series, as shown in Figure 4 by means of metal strips **11** represented schematically in Figure 4, and one of which strips 11 is shown in Figure 2. The strips 11 are joined, for example, by soldering or welding, to the terminals of the respective cells 4. The metal strips 11 are similarly joined to the terminals 5 and 8, of said first set to connect the terminals 5 and 8 to the group of cells 4, for discharging the battery 2.

As shown in Figure 4, another metal strip **12** interconnects the data terminal 6 to the positive polarity terminal 5. A Further metal strip **13** interconnects a thermistor 14' in electrical series with the charging terminal 7 to the negative polarity terminal 8. The metal strips 11 further interconnect one or more thermostats **14** in electrical series with the cells 4. Each thermostat 14 and the thermistor 14' comprise, part of the electronically controlled charging circuit which is not otherwise shown for recharging the cells 4. Additional electronics, not shown, are contained in the spaces between the cells 4, inside the package 3.

As will appear from Figures 1, 2 and 10, the package 3 is of two piece construction, having a base **15** and a cover **16**, fabricated by molding a suitable plastics material. The base 15 and the cover 16 are fused, or are adhesively joined, together. The battery terminals 5, 6, 7, and 8 are fabricated from metal strip. Each of the terminals 5, 6, 7, and 8 extends from inside the package 3, through the base 15, and toward the exterior of the package 3. A free end **17**, Figure 2, of each of the terminals 5, 6, 7, and 8 is imbedded in the base 15 of the package 3. The terminals 5, 6, 7, and 8 are imbedded in the base 15 of the package 3 by injection molding.

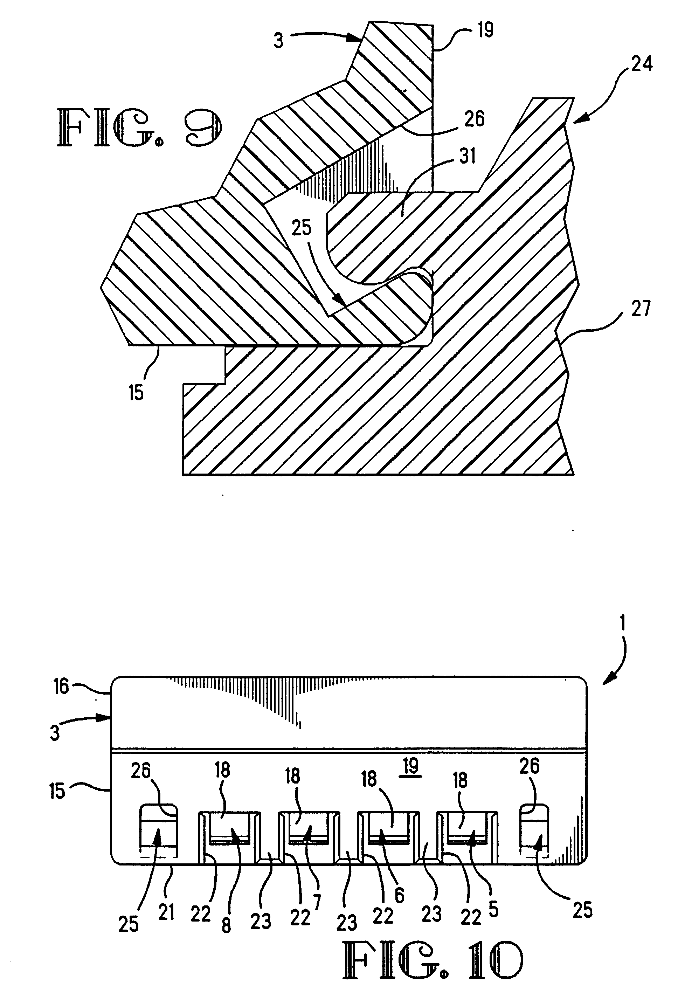

As shown in Figures 2 and 10, an accessible mating portion **18** of each of the battery terminals 5, 6, 7, and 8 faces toward an end **19** of the package 3, and is obversely curved also to face toward a bottom side **20** of the package 3. Each mating portion 18 is accessible through the end 19 of the package 3 and also through the bottom side 20 of the package 3. The end 19 and the side 20 of the package 3 intersect along the base 15 at an intersection **21**, Figures 1 and 10. At the intersection 21 of the end 19 and the bottom side 20, the end 19 and the side 20 of the package 3 are recessed for access to the accessible mating portions 18 of the battery terminals 5, 6, 7, and 8. More specifically, a series of recesses **22** are provided in the intersection 21. The accessible portions 18 of the battery terminals 5, 6, 7, and 8 lie within respective recesses 22, and are thereby recessed from the exterior surface of the package 3. The intersection 21 forms ribs **23**, Figure 1, between the battery terminals 5, 6, 7, and 8, separating the accessible portions 18 of the battery terminals 5, 6, 7, and 8, one from another. The accessible portions 18 of the battery terminals 5, 6, 7, and 8 are recessed from exterior surfaces of the ribs 23. Accordingly, the end 19 and the side 20 of the package 3 protect the battery terminals 5, 6, 7, and 8 from being accidentally touched, while the battery 4 is being carried about.

The end 19 and the bottom side 20 of the package 3 are both adapted to matingly engage a mating electrical connector **24**, Figures 1 and 2. A hook shaped coupling **25**, Figure 9, is divided into two portions, Figures 1 and 10, at opposite ends of the row of battery terminals 5, 6, 7, and 8. The two portions of the hook shaped coupling 25 lie within respective recesses **26** in the end 19 of the package 3. The recesses 26 which are of different widths and are spaced apart by a known distance, to provide coding means so that the package 3 cannot be mated with an incompatible connector 24 for mating with a package 3 having differently spaced or sized recesses 26.

As best seen in Figures 1, the mating electrical connector 24 comprises, a unitary, one piece, insulating housing block **27** and two pairs of conductive electrical contacts **28**. The housing block 27 comprises, a base **29** for mounting on a circuit board, not shown, a side wall **30** extending from the base 29, and projecting end barriers **31** extending outward with respect to the side wall 30, and extending upward with respect to the base 29. The base 29 is mounted to a circuit board by fasteners, not shown, through fastener receiving openings, one shown in Figure 1 at **32**, in a part of the base 29 that extends back past the side wall 30. As shown in Figure 5 each opening 32 may be replaced by a split, board lock **33**, depending from the base 29, and being of a construction and for a purpose, disclosed in U.S. Patent 4,907,987.

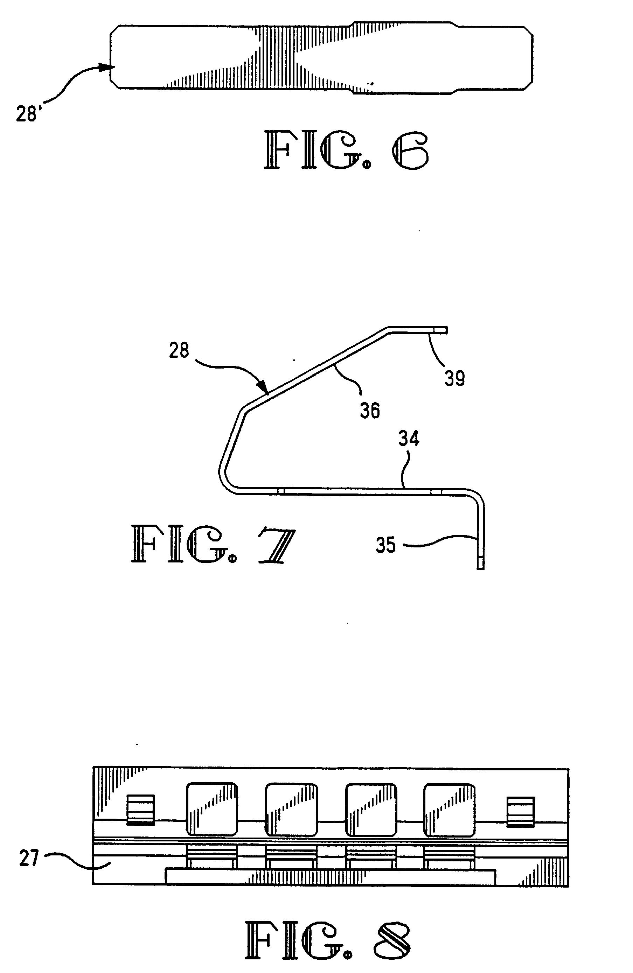

Each of the contacts 28 is formed from a generally rectangular flat metal blank 28', shown in Figure 6. Each contact 28 is bent from the flat blank 28' to the form shown in Figure 7. Each contact 28 includes a straight base portion **34** adjacent to a free end portion **35** that is bent downward to form an electrical terminal for plugging into a hole in a circuit board, not shown, of electronic equipment. As shown in Figure 2, the free end portion 35 of the contact 28 may alternatively extend straight out from the base portion 34 of the contact 28, as indicated in broken lines, to provide an electrical terminal extending beyond the side wall 30 of the block 27; in which case, the base 29 of the housing block 27 is shortened to end at the side wall 30. The free end portions 35 are connected to respective conductors on the circuit board, which are appropriate to the terminals 5, 6, 7, and 8, respectively.

As shown in Figures 2 and 7, each contact 28 is bent back on itself to form an inclined, resiliently delectable mating portion **36** extending from the base portion 34. The base portion 34 of each contact 28 impinges against the base 29 of the housing block 27. The deflectable portion 36 of each contact 28 extends from the base 29 of the housing block 27 towards an open top **37** of the housing block 27, and towards an open side **38** of the housing block 27. An adjacent, free end **39** of the deflectable portion 36 of each contact 28 extends into a cavity **40** in the side wall 30 of the housing block 27 so as to be protected against accidental damage. There is sufficient clearance inside the cavity 40 to allow for deflection of the portion 36 of the contact 28 by wiping pressure connection with the exposed mating portion 18 of a corresponding one of the battery terminals 5, 6, 7, and 8. The portion 36 is shown in its deflected position in broken lines, and in its original position in full lines, in Figure 2. The contacts 28 are accessible both through the open top 37, and the open side 38, of the housing block 27, for mating engagement with the mating portions 18 of respective terminals 5, 6, 7, and 8.

The end barriers 31, which are at opposite ends of the row of the contacts 28, are hook shaped, as best seen in Figure 9, for coupling onto the hook shaped coupling 25 that is recessed in the package 3. The barriers 31 are at least slightly taller than the contacts 28, and serve to protect the contacts 28 from accidentally damage. The size of the end barriers 31, and the spacing between the end barriers 31, are adapted for matching with the coupling 25 on the package 3. The barriers 31 are of different widths for plugging into the recesses 26 of different widths in the end 19 of the package 3. The barriers 31 are incapable of coupling with a coupling 25 of different size and spacing comprised, for example, in a different, incompatible, package 3. Further, the recesses of different widths may vary to distinguish different connectors 1, and the recesses of all the different connectors 1 may mate with a charging circuit, not shown. In order to uncouple the battery connector 1 from the mating connector 24, the package 3 is pivoted clockwise from its position shown in Figure 9, so as to unhook the coupling 25 from the barriers 31, and to allow withdrawal of the barriers 31 along the recesses 26. In order to mate the battery connector 1 with the mating connector 24, an opposite procedure is followed, in that the package 3 is inserted along the barriers 31, and is pivoted anticlockwise to couple the coupling 25 to the barriers 31.

The package 3 matingly engages the mating connector 24 by movement of the package 3 in two directions of motion, either by movement of the end 19 of the package 3 into the open side 38 of the mating connector 24, or by movement of the bottom side 20 of the package 3 into the open top 37 of the mating connector 24 and toward the base 29 of the mating connector 24. Following such movement, the package 3 is pivoted, as described previously, to couple the coupling 25 with the hook shaped barriers 31. The package 3 matingly connects with the mating connector 24, when the end 19 of the package 3 and the side wall 30 of the mating connector 24 overlap, and when the bottom side 20 of the package 3 covers and seats against the base 29 of the mating connector 24. A tactile feel and audible snap results from movement of the package 3 in an endwise direction, such that the hook shaped coupling 25 resiliently deflects slightly, to pass beyond the barriers 31 and to recover resiliently and quickly from its deflection accompanied by said audible snap and tactile feel, indicating that the coupling function according to figure 9 has been accomplished.

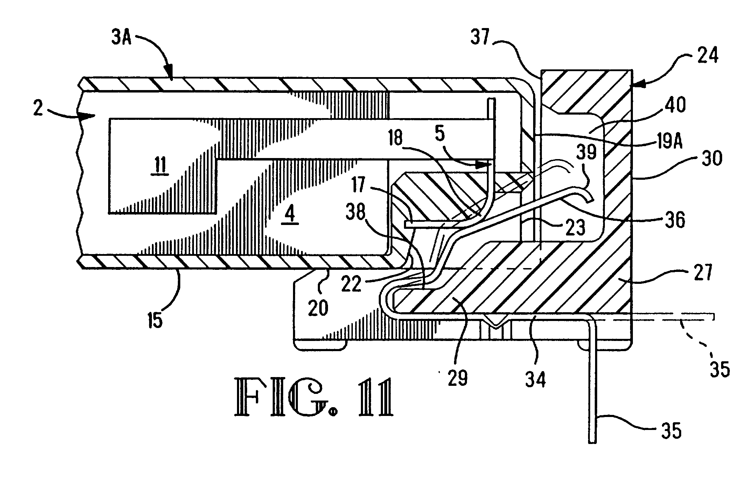

The open top 37 of the housing block 27 is adapted so that the block 27 can mate and connect with a package having an end 19 of different height to that described above, for example, a package 3A shown in Figure 11 which has an end 19A of lesser height, for mating connection with the same connector 24 as that described above.

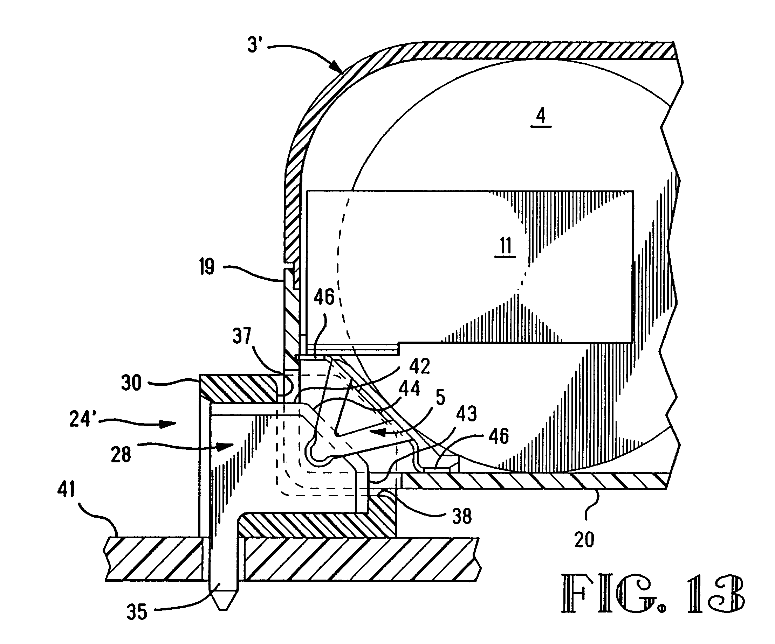

Another embodiment of the mating connector 24 and the package 3 will now be described with reference to Figures 12 and 13, in which the same reference numerals as those used above designate parts of at least similar function. The mating connector 24 of Figures 12 and 13, has the following differences in construction as compared with the connector 24. The electrical contacts 28 mounted in the housing block 27 are metal blades having depending terminals 35 in the form of posts for mounting to a circuit board **41.** The blades have top edges **42** facing an open top 37 of the housing block 27, and side edges **43** facing an open side 38 of the housing block 27. The blades have chamfered edges **44** at corners defined by the top edges 42 and the side edges 43. The barriers 31, Figure 12, which do not comprise hook shaped couplings, are of different widths, and are adapted to be matingly received in recesses 26 of different widths in a modified package 3', as shown in Figure 12. The recesses 22 extend through the intersection of the end 19 and the bottom side 20 of the package 3'. The coupling 25 is absent from the modified package 3' of Figure 12.

In the package 3' shown in Figures 12 and 12, the battery terminal 5, as well as all the other battery terminals, not shown, is formed from a sheet metal flat blank shown in Figure 14. The blank has a central spine **45** and a series of ribs **46**, and **47** extending in opposite directions from the spine 45. The ribs 46, and 47 engage the insulative material of the package 3', and thereby, mount and stabilize the terminal 5 in one of the recesses 22. One of the ribs 46 is joined by welding or by solder to a metal strip 11, Figure 13, that interconnects the cells 4 of the battery 2.

The terminal 5, as well as each other terminal, of the package 3' comprises a two-sided, spring, receptacle **48**, Figure 16. Each side **49** of the receptacle is triangular, and comprises a pair of beams **50** intersecting at an apex of the triangle. An inwardly bowed contact surface **51** at the apex engages one side of the blade contact 28 of the mating connector 24'. The receptacle 48 has outwardly bowed open sides 49. The open sides 49 are accessible from the end 19 of the package 3' and the bottom side 20 of the package 3', to receive and connect with a respective blade contact 28 of the mating connector 24' entering the corresponding recess 22 of the package 3' from the end 19 of the package 3' or from the open bottom side 20 of the package 3'. The pair of beams 50 distribute internal strain caused by resilient deflection of the sides 49 of the receptacle 48 when one of the blade contacts 28 of the mating connector 24', Figures 13 and 16, enters one of the open sides of the receptacle 48, and wedges between, and is clamped between, the contact surfaces 51 of the sides 49 of the receptacle 48. The pair of beams 50 reduces the stiffness in the sides 49 to assure ease of their resilient deflection when matingly connected with one of the blade contacts 28.

The receptacle 48 is mounted to project diagonally in a recess 22, Figure 13, with the spine 45 inclined along the same angle as the chamfered edge 44 of the respective blade contact 28. The chamfered edge 44 of the contact 28 is opposite to the spine 45 when the receptacle 48 is mated with the contact 28. Unlike the package 3 of Figure 1, the package 3' of Figure 12 does not need to pivot when mating with the mating connector 24' of Figure 12. The package 3' of Figure 12 is capable of mating connection with the mating connector 24' by movement of the end 19 of the package 3' into the open side 38 of the mating connector 24, or by movement of the bottom side 20 of the package 3' into the open top 37 of the mating connector 24'. Mating connection is achieved when the end 19 of the package 3 is overlapped by the side wall 30 of the connector 24', and the bottom side 20 covers the base 29 of the mating connector 24'.

## Claims

1. A first electrical connector (1) in combination with a mating electrical connector (24) the first connector (1) comprising a package (3) containing a battery (2) with an associated battery charging control circuit (14,14'), the package (3) supporting proximate to an end (19) and an adjacent side (20) thereof, a set of electrical battery terminals (5,6,7,8) in insulating relationship with each other, the set of terminals comprising a first pair of terminals (5,8) connected in electrical series with the battery (2), and a second pair of terminals (6,7) connected to a positive pole of the battery (2) and to the charging control circuit, respectively, the terminals (5,6,7,8) each having a mating portion (18) exposed for access through the end (19) of the package (3) and also through said adjacent side (20) to mate with a respective mating electrical contact (28), said end and said adjacent side (20) of the package (3) being commonly recessed to provide access to said mating portions (18), the mating electrical connector (24) comprising an insulating housing block (27) in which said mating electrical contacts (28) are mounted, each of these contacts (28) having a mating portion (36) projecting from the insulating block (27), the block (27) and the package (3) being adapted to couple, and urge each mating portion (36) of each mating contact (28) in mating engagement with the mating portion (18) of a respective battery terminal (5,6,7,8), the package (3) also containing projection receiving recesses (26) to align with and receive mating projections (31) of the mating connector.

2. A connector as claimed in claim 1, wherein each mating portion (18) is curved so as to face both the end (19) and the adjacent side (20) of the package (3), a connecting portion of each terminal (5,6,7,8) extending from the mating portion (18) thereof into the interior of the package (3).

3. A connector as claimed in claim 2, wherein the connecting portions of the terminals (5,8) of the first pair are connected to metal strips (11) by means of which cells (4) of the battery (2) are connected in electrical series.

4. A connector as claimed in claim 1,2 or 3, wherein the package (3) is made of insulating material, free ends of the mating portions (18) of the terminals (5,6,7,8) being embedded in the insulating material of the package (3).

5. A connector as claimed in any one of the preceding claims, wherein said mating projections (31) are first hook-shaped coupling members (31) projecting from the block (27), the package (3) having therein second hook-shaped coupling members (25) for snap engagement therewith to latch each mating portion (36) of each mating contact (28) in mating engagement with the mating portion (18) of the respective battery terminal (5,6,7,8).

6. A connector as claimed in any one of claims 1 to 4, wherein the insulating housing block (27) has a base (29) for mouting on a circuit board, a side wall (30) upstanding from the base (29) and wherein said mating projections (31) are end barriers (31) projecting forwardly from the base (29), said electrical contacts (28) extending from the base (29) towards an open side (38) of the block (27) and towards an open top (37) of the housing block (27), the end barriers (31) being pluggable through said end (19) and said adjacent side (20) of the package (3) to mate said mating contacts (28) with said mating portions (18) with the open side (38) and said open top (37) of the housing block (27) covered by said end (19) and said adjacent side (20) of the package (3), and the side wall (30) of the housing block (27) overlapping said end (19) of the package (3).

7. A connector as claimed in claim 6, wherein each electrical contact (28) has a base portion (34) impinging against the base (29) of the housing block (17) and a free end portion (35) extending from the housing block (27) for connection to a respective conductor of the circuit board.

8. A connector as claimed in claim 6 or 7, wherein the mating portion (36) of each mating contact (28) is resiliently deflectable, the side wall (30) having recesses (40) therein each for receiving a respective one of the deflectable mating portions (36).

## Patentansprüche

1. Erster elektrischer Verbinder (1) zusammen mit einem elektrischen Gegenverbinder (24), wobei der erste Verbinder (1) ein Paket (3), das eine Batterie (2) mit einer zugeordneten Batterieladesteuerschaltung (14, 14') enthält, umfaßt, wobei das Paket (3) nahe einem Ende (19) und einer benachbarten Seite (20) davon einen Satz elektrischer Batterieklemmen (5, 6, 7, 8) in isolierter Beziehung zueinander trägt, wobei der Satz von Klemmen ein erstes Paar Klemmen (5, 8), die mit der Batterie (2) elektrisch in Reihe geschaltet sind, und ein zweites Paar Klemmen (6, 7), die mit einem Pluspol der Batterie (2) bzw. mit der Ladesteuerschaltung verbunden sind, umfaßt, wobei die Klemmen (5, 6, 7, 8) jeweils ein Gegenstück (18) aufweisen, das zum Zugang durch das Ende (19) des Pakets (3) und auch durch die benachbarte Seite (20) zum Zusammenstecken mit einem jeweiligen elektrischen Gegenkontakt (28) frei liegt, wobei das Ende und die benachbarte Seite (20) des Pakets (3) gemeinsam ausgenommen sind, um den Zugang zu den Gegenstücken (18) zu bilden, wobei der elektrische Gegenverbinder (24) einen isolierenden Gehäuseblock (27) umfaßt, in dem die elektrischen Gegenkontakte (28) befestigt sind, wobei jeder dieser Kontakte (28) ein Gegenstück (36) aufweist, das von dem isolierenden Block (27) vorsteht, wobei der Block (27) und das Paket (3) ankoppeln und jedes Gegenstück (36) von jedem Gegenkontakt (28) in Steckeingriff mit dem Gegenstück (18) einer jeweiligen Batterieklemme (5, 6, 7, 8) drängen können, wobei das Paket (3) auch vorsprungaufnehmende Ausnehmungen (26) zur Ausrichtung auf und zur Aufnahme von Gegenvorsprüngen (31) des Gegenverbinders enthält.

2. Verbinder nach Anspruch 1, bei dem jedes Gegenstück (18) so gekrümmt ist, daß es sowohl dem Ende (19) als auch der benachbarten Seite (20) des Pakets (3) zugewandt ist, wobei sich ein Verbindungsstück jeder Klemme (5, 6, 7, 8) von ihrem Gegenstück (18) in das Innere des Pakets (3) erstreckt.

3. Verbinder nach Anspruch 2, bei dem die Verbindungsstücke der Klemmen (5, 8) des ersten Paares mit Metallstreifen (11) verbunden sind, mittels derer Zellen (4) der Batterie (2) elektrisch in Reihe geschaltet sind.

4. Verbinder nach Anspruch 1, 2 oder 3, bei dem das Paket (3) aus isolierendem Material hergestellt ist, wobei freie Enden der Gegenstücke (18) der Klemmen (5, 6, 7, 8) in dem isolierenden Material des Pakets (3) eingebettet sind.

5. Verbinder nach einem der vorhergehenden Ansprüche, bei dem die Gegenvorsprünge (31) von dem Block (27) vorspringende erste hakenförmige Kopplungselemente (31) sind, wobei zum Schnappeingriff damit in dem Paket (3) zweite hakenförmige Kopplungselemente (25) vorgesehen sind, um jedes Gegenstück (36) von jedem Gegenkontakt (28) in Steckeingriff mit dem Gegenstück (18) der jeweiligen Batterieklemme (5, 6, 7, 8) zu verriegeln.

6. Verbinder nach einem der Ansprüche 1 bis 4, bei dem der isolierende Gehäuseblock (27) einen Boden (29) zum Befestigen an einer Leiterplatte aufweist, wobei eine Seitenwand (30) von dem Boden (29) hochsteht, und bei dem die Gegenvorsprünge (31) von dem Boden (29) aus nach vorne vorstehende Endbarrieren (31) sind, wobei die elektrischen Kontakte (28) von dem Boden (29) aus in Richtung einer offenen Seite (38) des Blocks (27) und in Richtung einer offenen Oberseite (37) des Gehäuseblocks (27) verlaufen, wobei die Endbarrieren (31) durch das Ende (19) und die benachbarte Seite (20) des Pakets (3) gesteckt werden können, um die Gegenkontakte (28) mit den Gegenstücken (18) zusammenzustecken, wobei die offene Seite (38) und die offene Oberseite (37) des Gehäuseblocks (27) von dem Ende (19) und der benachbarten Seite (20) des Pakets (3) bedeckt sind und wobei die Seitenwand (30) des Gehäuseblocks (27) das Ende (19) des Pakets (3) überlappt.

7. Verbinder nach Anspruch 6, bei dem jeder elektrische Kontakt (28) ein am Boden (29) des Gehäuseblocks (17) anstoßendes Bodenstück (34) und ein sich vom Gehäuseblock (27) aus erstreckendes freies Endstück (35) zum Anschluß an einen jeweiligen Leiter der Leiterplatte aufweist.

8. Verbinder nach einem der Ansprüche 6 oder 7, bei dem das Gegenstück (36) von jedem Gegenkontakt (28) sich elastisch auslenken läßt, wobei in der Seitenwand (30) Ausnehmungen (40) zum jeweiligen Aufnehmen eines jeweiligen der auslenkbaren Gegenstücke (36) vorhanden sind.

## Revendications

1. Premier connecteur électrique (1) associé à un connecteur électrique d'accouplement (24), le premier connecteur (1) comprenant un boîtier (3) contenant une batterie (2) avec un circuit de commande (14,14') de la charge de la batterie associé, le boîtier (3) supportant, à proximité d'une extrémité (19) et d'un côté adjacent (20) de celui-ci, un ensemble de bornes électriques (5,6,7,8) de batterie isolées les unes par rapport aux autres, l'ensemble de bornes comprenant une première paire de bornes (5,8) connectées en série électrique à la batterie (2), et une deuxième paire de bornes (6,7) connectées à un pôle positif de la batterie (2) et au circuit de commande de la charge, respectivement, les bornes (5,6,7,8) présentant chacune une portion d'accouplement (18) exposée en vue d'un accès à travers l'extrémité (19) du boîtier (3) et également à travers ledit côté adjacent (20), de façon à s'accoupler à un contact électrique d'accouplement (28) respectif, ladite extrémité et ledit côté adjacent (20) du boîtier (3) étant pourvus d'évidements communs permettant d'accéder auxdites portions d'accouplement (18), le connecteur électrique d'accouplement (24) comprenant un bloc d'emboîtage isolant (27) dans lequel sont montés lesdits contacts électriques d'accouplement (28), chacun de ces contacts (28) présentant une portion d'accouplement (36) faisant saillie depuis le bloc isolant (27), le bloc (27) et le boîtier (3) étant adaptés pour s'accoupler et pousser chaque portion d'accouplement (36) de chaque contact d'accouplement (28) en engagement d'accouplement avec la portion d'accouplement (18) d'une borne respective (5,6,7,8) de la batterie, le boîtier (3) contenant également des évidements (26) recevant des saillies destinées à s'aligner avec, et à recevoir, des saillies d'accouplement (31) du connecteur d'accouplement.

2. Connecteur selon la revendication 1, dans lequel chaque portion d'accouplement (18) est incurvée de façon à faire face à la fois à l'extrémité (19) et au côté adjacent (20) du boîtier (3), une portion de connexion de chaque borne (5,6,7,8) se prolongeant depuis la portion d'accouplement (18) de celle-ci jusqu'à l'intérieur du boîtier (3).

3. Connecteur selon la revendication 2, dans lequel les portins de connexion des bornes (5,8) de la première paire sont connectées à des languettes métalliques (11) au moyen desquelles les éléments (4) de la batterie (2) sont connectés en série électrique.

4. Connecteur selon la revendication 1, 2 ou 3, dans lequel le boîtier (3) est en matériau isolant, des extrémités libres des portions d'accouplement (18) des bornes (5,6,7,8) étant noyées dans le matériau isolant du boîtier (3).

5. Connecteur selon l'une quelconque des revendications précédentes, dans lequel lesdites saillies d'accouplement (31) sont des premiers membres de couplage (31) en forme de crochet faisant saillie depuis le bloc (27), le boîtier (3) renfermant des deuxièmes membres de couplage (25) en forme de crochet en vue d'un engagement par enclenchement avec celui-ci, afin de verrouiller chaque portion d'accouplement (36) de chaque contact d'accouplement (28) en engagement d'accouplement avec la portion d'accouplement (18) de la borne (5,6,7,8) respective de la batterie.

6. Connecteur selon l'une quelconque des revendications 1 à 4, dans lequel le bloc d'emboîtage isolant (27) possède une base (29) en vue d'un montage sur une carte imprimée, une paroi latérale (30) s'élevant depuis la base (29), et dans lequel lesdites saillies d'accouplement (31) sont des arrêts d'extrémité (31) faisant saillie vers l'avant depuis la base (29), lesdits contacts électriques (28) se prolongeant depuis la base (29) vers un côté ouvert (38) du bloc (27) et vers une face supérieure ouverte (37) du bloc d'emboîtage (27), les arrêts d'extrémité (31) étant enfichables à travers ladite extrémité (19) et ledit côté adjacent (20) du boîtier (3) pour accoupler lesdits contacts d'accouplement (28) auxdites portions d'accouplement (18), ladite extrémité (19) et ledit côté adjacent (20) du boîtier (3) couvrant le côté ouvert (38) et ladite face supérieure ouverte (37) du bloc d'emboîtage (27), et la paroi latérale (30) du bloc d'emboîtage (27) chevauchant ladite extrémité (19) du boîtier (3).

7. Connecteur selon la revendication 6, dans lequel chaque contact électrique (28) possède une portion de base (34) heurtant contre la base (29) du bloc d'emboîtage (17) et une portion d'éxtrémité libre (35) se prolongeant depuis le bloc d'emboîtage (27) en vue d'une connexion à un conducteur respectif de la carte à circuit imprimé.

8. Connecteur selon la revendication 6 ou 7, dans lequel la portion d'accouplement (36) de chaque contact d'accouplement (28) est susceptible de fléchir de manière élastique, des évidements (40) étant ménagés dans la paroi latérale (30), chacun recevant une portion respective parmi les portions d'accouplement (36) susceptibles de fléchir.
